# EUROPEAN PATENT APPLICATION

(11) **EP 4 207 560 A1**
(43) Date of publication of application: **05.07.2023**
(21) Application number: 21860518.6
(22) Date of filing: 27.08.2021
(51) Int. Cl.: H02K 1/27

(54) **BRUSHLESS DIRECT-CURRENT MOTOR**

(30) Priority: 31.08.2020 CN 202010906918
(71) Applicant: Guangdong Zhaoqing L & V Co. Ltd, Zhaoqing, Guangdong 526238 (CN)
(72) Inventor: XIE, Xiaowu, Zhaoqing Guangdong 526238 (CN); CHEN, Liang, Zhaoqing Guangdong 526238 (CN); HU, Guojun, Zhaoqing Guangdong 526238 (CN)
(74) Representative: Feira, Edoardo
(86) International application number: PCT/CN2021/115035
(87) International publication number: WO 2022/042686

(57) **Abstract**

The present invention relates to a brushless DC motor, which comprises a housing, a stator assembly, and a rotor assembly. One end or both ends of the housing are open to form a receiving space in an interior of the housing. The stator assembly comprises a stator and a winding arranged on the stator, and the stator assembly is arranged in the receiving space. The rotor assembly comprises a rotor connected with an output part to output power. An outer contour of the housing of the brushless DC motor comprises two parallel straight edges and two arc edges, or both the outer contour and an inner contour of the housing of the brushless DC motor are in the shape of a regular hexagon. The brushless DC motor provided by the invention has the characteristics of small installation size, light weight, low noise, small vibration, etc., and can meet the requirements of small size, light weight, low NVH, etc. which are increasingly concerned about in the field of automobile and the like.

## Description

### Technical Field

The invention relates to the technical field of electric motors, in particular to a brushless DC motor.

### Background Art

As an important prime mover, the electric motor is widely used in automobiles. In addition to directly driving vehicles as a power source, the electric motor can also be used to electrically drive various components in, e.g. the forward and backward movement of the vehicle seat, the adjustment of the backrest angle, the opening and closing of the sunroof, the lifting and lowering of the window, and the opening and closing of the trunk.

One kind of motors widely used in vehicles is brushless DC motor. Unlike the brushed DC motor, the brushless DC motor does not have a mechanical commutator, instead, it has an electronic commutator. Therefore, the brushless DC motor not only has the characteristic of good speed regulation performance of the DC motor, but also has the advantages of simple structure, no commutation spark, reliable operation and easy maintenance of the AC motor.

For example, the Chinese patent application CN 104518588 A discloses a brushless DC motor, which comprises a motor housing, a laminated ferromagnetic yoke, a spool, a coil, a rotor, etc. The outer surface of the motor housing is circular, forming a receiving cavity, and a circular rotor cavity is arranged in the interior. For another example, the Chinese utility model patent CN 2066640407 U discloses a brushless DC motor, comprising a stator core with a circular profile, on which an insulating framework and a stator winding are arranged.

However, for the brushless DC motor used in vehicles, in view of the limitation to the installation space and requirements of the vehicle NVH, it has to be further improved in terms of small size and high performance.

### Summary of the Invention

In order to solve the above technical problems to a certain extent, the invention proposes the following technical solution:
A brushless DC motor, comprising:
a housing, one end or both ends of which are opened to form a receiving space in an interior of the housing;
a stator assembly comprising a stator and a winding arranged on the stator, the stator assembly being arranged in the receiving space;
a rotor assembly comprising a rotor connected with an output part to output power;
wherein an outer contour of the housing of the brushless DC motor comprises two parallel straight edges and two arc edges.

According to one aspect of the invention, the outer contour of the housing of the brushless DC motor has a symmetrical structure.

The invention also proposes another form of brushless DC motor, comprising:
a housing, one end or both ends of which are opened to form a receiving space in an interior of the housing;
a stator assembly comprising a stator and a winding arranged on the stator, the stator assembly being arranged in the receiving space;
a rotor assembly comprising a rotor connected with an output part to output power;
wherein both the outer contour and an inner contour of the housing of the brushless DC motor are a regular hexagon.

According to one aspect of the invention, the housing of the brushless DC motor is provided with a transition fillet at each joint of every two adjacent edges of the regular hexagon.

According to one aspect of the invention, an outer contour of the stator, which is a regular hexagon, is closely matched with six edges of the inner contour of the housing.

According to one aspect of the invention, the brushless DC motor comprises a plurality of teeth, wherein each of the teeth comprises a first extension and a second extension, and one end of the first extension is located at a vertex of the hexagon, and extends from the vertex to a center of the stator.

According to one aspect of the invention, one side of the first extension adjacent to the center of the stator is provided with a second extension extending to both sides along an extension direction roughly perpendicular to the first extension.

According to one aspect of the invention, the second extension extends in a curved way, one side of which adjacent to the rotor is arc-shaped.

According to one aspect of the invention, arc contours of the second extensions of six teeth on a side adjacent to the rotor are located on a same circle, and a center of a circle where the arc is located coincides with the center of the hexagon.

According to one aspect of the invention, the six teeth are evenly distributed, and an angle between the first extensions of two adjacent teeth is 60 degrees.

According to the above technical solution of the invention, the proposed brushless DC motor has a reduced shape and therefore a smaller volume than the circular brushless DC motor in the prior art, so it can adapt to a narrower installation space. Accordingly, the weight of the motor is reduced.

### Brief Description of the Drawings

Exemplary embodiments of the invention are described with reference to the accompanying drawings, wherein:
Figure 1 is a sectional view of the brushless DC motor of the invention.
Figure 2 is a front view for an embodiment of the stator of the brushless DC motor in the invention.
Figure 3 is a schematic diagram for a specific embodiment of the stator of the brushless DC motor in the invention.
Figure 4 is a front view for another embodiment of the stator of the brushless DC motor in the invention.
Figure 5 is a schematic diagram of another structure of the brushless DC motor in the invention.

All drawings are only schematic and not necessarily drawn to scale. In addition, they only show the portions necessary to illustrate the invention, with other portions omitted or only mentioned. That is, in addition to the components shown in the drawings, the invention may also include other components.

### Detailed Description of the Embodiments

The technical solution of the invention is described in detail below in conjunction with the accompanying drawings.

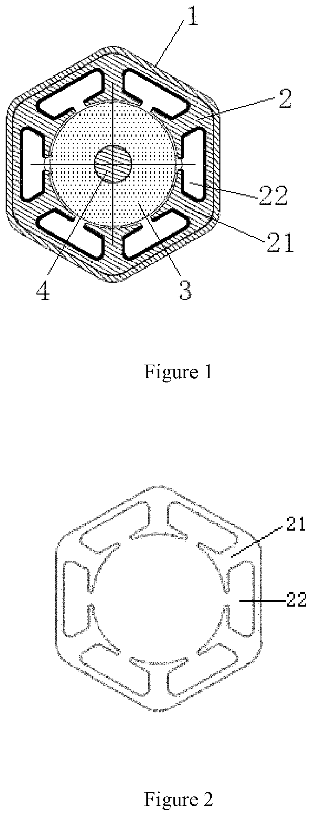

As shown in Figure 1, as an embodiment of the invention, the brushless DC motor comprises a housing 1, a stator 2 and a rotor 3. The housing 1 is preferably made of a metal material and is a cylindrical or tubular part with openings at one or both ends. The open end of the housing 1 is closed by an end cover, thus forming a receiving space in the interior of the housing 1. The housing 1 forms a yoke and serves as a magnetic circuit.

As an embodiment of the invention, the housing 1 is a hollow cylinder, and its section perpendicular to the motor shaft is a regular hexagon. Preferably, a transition fillet is arranged at each vertex of the regular hexagon, i.e., at the joint of every two adjacent edges.

Components such as a stator 2 and a rotor 3 are arranged in the receiving space of the housing 1.

The stator 2 is preferably formed by a plurality of stator laminations stacked with each other. It can be seen from Figure 2 that the outer contour of the stator 2 is a regular hexagon, matching with the inner contour of the housing 1. As an option, the six edges of each stator lamination are closely matched with the six edges of the hexagonal structure inside the motor housing, and the six vertex angles are matched with the six corresponding interior angles inside the motor housing. The stator 2 comprises six teeth 21 for winding the coil, and tooth grooves 22 are formed between the teeth 21.

A rotor 3 is arranged in the radial interior of the stator 2. The rotor 3 is made of a permanent magnetic material and forms a cylindrical structure. The rotor 3 can have 4 or 8 magnetic poles. A circular cavity is arranged in the interior of the rotor 3 to accommodate the motor shaft 4. The motor shaft 4 and the rotor 3 are connected by interference fit, so that when the rotor 3 rotates, the motor shaft 4 rotates to output power.

Figure 2 shows a specific embodiment of the stator. It can be clearly seen in Figure 2 that one end of each tooth of the stator is located at a vertex of the hexagon, and each tooth extends from the vertex to the center of the hexagon. Here, the portion of the tooth extending from the vertex to the center of the hexagon is defined as the first extension. On the side of the first extension adjacent to the stator center, there is provided a second extension extending to both sides along an extension direction roughly perpendicular to the first extension. The second extension preferably extends in a curved way, for example, as shown in Figure 2, the side adjacent to the rotor is arc-shaped, and the center of the arc coincides with the center of the hexagon. More preferably, the arc contours on the side adjacent to the rotor of the second extensions of the six teeth are located on the same circle.

As a preferred embodiment, the six teeth are evenly distributed, and an angle between the first extensions of two adjacent teeth is 60 degrees.

It can be seen from Figures 1 and 2 that the brushless DC motor housing in the invention has a hexagonal structure, so compared with the brushless DC motor with a circular housing in the prior art, it has a smaller volume, and is easier to be installed within a narrow space of the vehicle.

In addition, the brushless DC motor is a three-phase one, controlled by six-step square wave or three-phase sine wave, thus can improve the NVH of the motor.

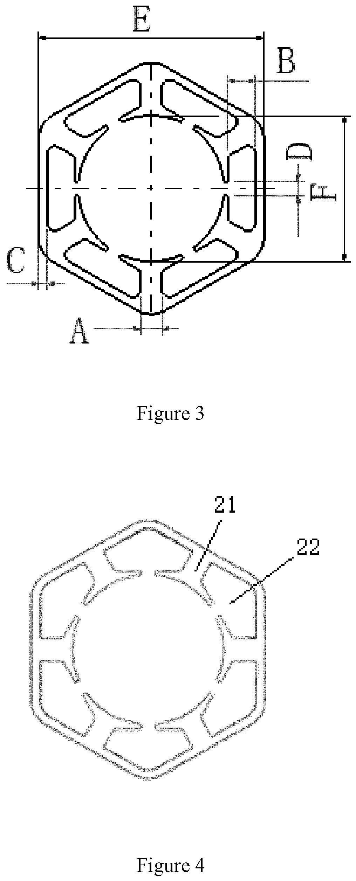

Figure 3 shows a specific size setting of the stator in Figure 2. As a specific embodiment, preferably, the width A of the first extension, also called tooth width, is set to be greater than or equal to 1.0 mm; the depth B of the tooth groove is greater than or equal to 1.5mm. The thickness C of each edge of the stator 2 is preferably greater than or equal to 0.5mm, while the distance D between the second extensions of two adjacent teeth, also called groove width, is greater than or equal to 0.3mm.

As a specific embodiment, the width E of the opposite side of the outer contour of the stator 2 is preferably 32mm, while the diameter F of the circle formed by the arc contours of the second extensions of the six tooth grooves on the side adjacent to the rotor is 20.7mm, the tooth width A is 3.0mm, the tooth groove depth B is 3.9mm, the thickness C of the edge of the stator is 1.2mm, and the groove width D is 2.0mm.

Figure 4 shows a specific embodiment of the stator. It differs from the embodiment of Figure 2 in that the teeth of the stator are located on edges instead of vertexes of the hexagon. Preferably, the tooth is located at the midpoint of the edge.

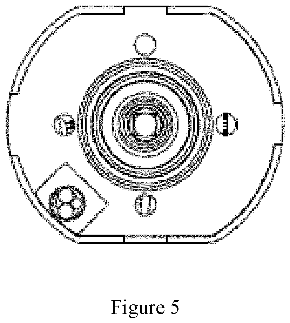

Figure 5 shows another embodiment of the invention. It can be seen from Figure 5 that the outer contour of the motor is not a hexagon, but a combination of arcs and line segments. Specifically, the outer contour of the motor is a combination of two arcs and two line segments, wherein the two line segments are parallel to each other, and the outer contour of the motor is symmetrical. During installation, the two planes of the outer contour of the motor can be used as mounting surfaces. Compared with a circular motor with the same power, this mounting surface can also reduce the size of the motor.

The invention has been clearly and completely described with reference to the above schematic embodiments. Those skilled in the art should understand that various other embodiments can be envisaged by modifying the disclosed technical solution without departing from the spirit and scope of the invention. These embodiments should be understood to fall within the scope determined by the present invention based on the claims and any equivalent technical solutions.

## Claims

1. A brushless DC motor, comprising:
a housing, one end or both ends of which are open to form a receiving space in an interior of the housing;
a stator assembly comprising a stator and a winding arranged on the stator, the stator assembly being arranged in the receiving space;
a rotor assembly comprising a rotor connected with an output part to output power;
**characterized in that** an outer contour of the housing of the brushless DC motor comprises two parallel straight edges and two arc edges.

2. The brushless DC motor according to claim 1, **characterized in that** the outer contour of the housing of the brushless DC motor is symmetrical.

3. A brushless DC motor, comprising:
a housing, one end or both ends of which are open to form a receiving space in an interior of the housing;
a stator assembly comprising a stator and a winding arranged on the stator, the stator assembly being arranged in the receiving space;
a rotor assembly comprising a rotor connected with an output part to output power;
**characterized in that** both the outer contour and inner contour of the housing of the brushless DC motor are in the shape of a regular hexagon.

4. The brushless DC motor according to claim 3, **characterized in that** the housing of the brushless DC motor is provided with a transition fillet at each joint of every two adjacent edges of the regular hexagon.

5. A brushless DC motor according to claim 3 or 4, **characterized in that** an outer contour of the stator, which is in the shape of a regular hexagon, is closely matched with six edges of the inner contour of the housing.

6. The brushless DC motor according to claim 5, **characterized in that** the stator comprises a plurality of teeth, wherein each of the teeth comprises a first extension and a second extension, and one end of the first extension is located at a vertex of the hexagon, and extends from the vertex to a center of the stator.

7. The brushless DC motor according to claim 6, **characterized in that** at the side of the first extension adjacent to the center of the stator a second extension extending to both sides along an extension direction generally perpendicular to the first extension is provided.

8. The brushless DC motor according to claim 7, **characterized in that** the second extension extends in a curved way, one side of which adjacent to the rotor is arc-shaped.

9. The brushless DC motor according to claim 8, **characterized in that** arc contours of the second extensions of six teeth on the side adjacent to the rotor are located on a same circle, and the center of the circle where the arc is located coincides with the center of the hexagon.

10. The brushless DC motor according to any one of claims 6-9, **characterized in that** the six teeth are evenly distributed, and the angle between the first extensions of two adjacent teeth is 60 degrees.
